# FASCICULE DE BREVET EUROPEEN

(11) **EP 1 302 078 B1**
(45) Date de publication et mention de la délivrance du brevet: **03.10.2018**
(21) Numéro de dépôt: 01934070.2
(22) Date de dépôt: 09.05.2001
(51) Int. Cl.: H04N 19/46, H04N 19/40, H04N 19/89, H04N 19/61

(54) **PROCEDE ET DISPOSITIF DE CODAGE D'UN FLUX D'IMAGES VIDEO**
VERFAHREN UND VORRICHTUNG ZUR KODIERUNG EINES VIDEOBILDSTROMS
METHOD AND APPARATUS FOR CODING A VIDEO IMAGE FLUX

(30) Priorité: 26.05.2000 FR 0006733
(43) Date de publication de la demande: 16.04.2003
(73) Titulaire: Thomson Licensing, 92130 Issy-les-Moulineaux (FR)
(72) Inventeur: ALEXANDRE, Patrice, F-35510 Cesson Sevigne (FR); CHATEL, Jean, F-35700 Rennes (FR)
(74) Mandataire: Vidon Brevets & Stratégie
(86) Numéro de dépôt international: PCT/FR2001/001404
(87) Numéro de publication internationale: WO 2001/093594

(56) Documents cités:
- EP-A- 0 492 528
- EP-A- 0 696 873
- EP-A- 0 823 822
- WO-A-97/40626
- WO-A1-95/35628

## Description

L'invention se rapporte à un procédé de codage d'un flux d'images vidéo. Plus particulièrement, l'invention se rapporte à du codage répétitif d'images vidéo à l'aide d'un algorithme de compression avec perte d'information.

La transmission d'un flux d'images vidéo numériques nécessite un débit binaire important, de l'ordre de 270 Mb/s pour des images de qualité studio. Or, les canaux de transmissions autorisant de tels débits binaires sont relativement coûteux pour de longues distances. Afin de pouvoir utiliser des canaux de transmissions de plus faible capacité, il est connu d'avoir recours à des algorithmes de compression d'image.

Parmi les algorithmes de compressions, il est connu d'utiliser des algorithmes de compression avec ou sans perte d'information. Les algorithmes sans perte réalisent un codage basé sur les redondances d'information de chaque image ou d'une pluralité d'images. Les algorithmes sans pertes présentent comme avantage de ne pas dégrader la qualité du signal mais ont comme défaut d'avoir un débit variable qui dépend de l'image à coder.

Les codes avec perte suppriment des éléments d'information d'image qui ne sont normalement pas visible et qui permettent de réduire l'information à transmettre. Les codes avec perte permettent d'obtenir un débit constant ou limité en faisant varier le taux de perte d'information.

Actuellement, de nombreux algorithmes de compression d'image avec perte d'information sont connus. A titre indicatif et non limitatif, il existe les normes ITU-T H261 et ITU-T H263 pour la vidéophonie, et ISO/IEC 11172 et ISO/IEC 13818 pour les images de télévision, ces dernières étant connues sous le nom de MPEG (de l'anglais Motion Picture Expert Group).

A titre d'exemple, la présente demande se basera principalement sur les procédés de codage de type MPEG. Bien que l'invention ne soit pas limitée à ces normes, dans la suite de la description, on se référera principalement à celles-ci.

On rappelle ci-après le principe d'une telle compression.

Dans les normes MPEG vidéo, on obtient une compression des signaux numériques vidéo en exploitant la redondance spatiale et la redondance temporelle des images codées.

La redondance spatiale est évaluée principalement grâce à la succession de trois opérations : une opération communément appelée transformée cosinus discrète et notée DCT (de l'anglais Discrète Cosine Transform), une opération de quantification des coefficients issus de la DCT et une opération de codage à longueur variable pour décrire les coefficients quantifiés issus de la DCT.

La redondance temporelle est analysée par une opération de compensation de mouvement qui consiste, par translation de chaque bloc de l'image courante, à rechercher le bloc le plus ressemblant situé dans une image de référence. L'analyse de la redondance temporelle conduit à déterminer un champ de vecteurs de translation, communément appelés vecteurs de mouvement, ainsi qu'une erreur de prédiction qui est la différence entre le signal de l'image courante et le signal de l'image prédite par compensation de mouvement. L'erreur de prédiction est alors analysée selon le principe de la redondance spatiale.

Le codage MPEG est de type prédictif. Il s'ensuit que le décodage qui lui est associé doit être régulièrement réinitialisé afin de protéger le signal contre toute erreur de transmission ou toute rupture de signal due au basculement du décodeur d'un programme sur un autre.

A cette fin, la norme MPEG prévoit que, périodiquement, les images doivent être codées en mode spatial, c'est-à-dire selon un mode exploitant seulement la redondance spatiale. Les images codées en mode spatial sont appelées images INTRA ou images I.

Les images codées en exploitant la redondance temporelle sont de deux types : d'une part, les images construites par référence à une image temporellement antérieure à partir d'une prédiction avant et, d'autre part, les images construites par référence à deux images temporellement antérieure et postérieure à partir d'une prédiction avant et d'une prédiction arrière.

Les images codées construites à partir d'une prédiction avant sont appelées images prédites ou images P et les images codées construites à partir d'une prédiction avant et d'une prédiction arrière sont appelées images bidirectionnelles ou images B.

Une image I est décodée sans faire référence à d'autres images qu'à elle-même. Une image P est décodée en faisant référence à l'image P ou I qui la précède. Une image B est décodée en faisant appel à l'image I ou P qui la précède et à l'image I ou P qui la suit.

La périodicité des images I définit un groupe d'images communément noté GOP (de l'anglais Group Of Pictures).

A l'intérieur d'un même GOP, la quantité de données contenues dans une image I est généralement supérieure à la quantité de données contenues dans une image P et la quantité de données contenues dans une image P est généralement supérieure à la quantité de données contenues dans une image B.

L'homme du métier se reportera aux normes ISO/IEC 11172 et ISO/IEC 13818 pour les détails de mise en oeuvre de ce type de codage. La dégradation de l'image engendrée par le codage n'est pas perceptible pour l'oeil d'un spectateur. Cependant, lorsqu'une séquence d'images a subit plusieurs cycles de décodage-codage, l'accumulation des pertes d'information est telle que la dégradation devient perceptible.

La diffusion télévisuelle nécessite la réalisation de plusieurs cycles de codage. En effet le travail de montage en studio d'un film ou d'un reportage nécessite de coder et décoder la séquence d'image à coder de multiples fois, classiquement entre 5 et 10 fois pour un reportage.

Or, un problème, survenant lors de la mise en cascade de plusieurs séries de décodage et de codage, est l'accumulation des pertes d'information. Après dix cycles de décodage-codage, l'image est de qualité médiocre.

Pour remédier à ce problème, il est connu d'utiliser des données d'aide au recodage. L'homme du métier peut par exemple se reporter aux demandes internationales de brevet publiées sous les numéros WO 95/35628, WO 96/24222 et WO 98/03017 ou à la demande de brevet européen EP-A-0 618 734. Le principe des données d'aide au recodage est d'associer à chaque image décodée des informations relatives à des paramètres de codage utilisés lors du précédent codage afin de réutiliser ces mêmes paramètres lors du prochain codage de l'image. Ainsi, la perte d'information d'image se trouve limitée après le premier codage, autorisant ainsi un nombre de cycles de décodage-codage important tout en conservant une bonne qualité d'image.

Différentes possibilités de mise en oeuvre sont envisageables, certaines étant déjà incluses dans les normes SMPTE 319M, SMPTE 327M et SMPTE 329M. Pour ce qui est du codage MPEG, il est possible de réutiliser de très nombreux paramètres. Les principaux paramètres réutilisés sont le type d'image qui indique si l'image subit un codage intra-image, un codage prédictif ou un codage prédictif bidirectionnel, et également le mode de codage qui indique si l'image est codée par image ou par trame. Des paramètres complémentaires couramment utilisés sont la résolution de l'image (ou niveau), la répartition des informations de chrominance (ou profil), les vecteurs de mouvements, les pas de quantification et les matrices de quantification. Bien évidemment, tous les paramètres de codage utilisés (c'est à dire tous les paramètres explicitement codés dans le flux) sont susceptibles d'être réutilisés.

Les données d'aide au recodage peuvent être mises en oeuvre de différentes façons. Pour associer à chaque image les données d'aide au recodage, il est connu d'utiliser comme canal une voie son auxiliaire, des bits non significatifs de quantification de niveau de gris, ou les intervalles de suppression de trame et/ou de ligne plus connus sous les sigles VBI et HBI (de l'anglais Vertical Blanking Interval et Horizontal Blanking Interval).

L'utilisation des données d'aide présente toutefois quelques inconvénients. Lorsque le flux d'image est modifié, les données d'aide ne sont pas modifiées en conséquence. Suivant la technique de mise en oeuvre, les données d'aide au recodage sont soit supprimées soit conservées suivant le traitement effectué. Si la mise en oeuvre efface systématiquement les données d'aide, il devient impossible de réutiliser les informations bien que certaines soient utilisables. A titre d'exemple, le type d'image et le mode de codage sont des informations que l'on peut conserver malgré l'incrustation d'un logo. Si la mise en oeuvre n'efface pas les données d'aide, celles-ci peuvent dans certains cas créer des pertes d'information plus importante que si elles étaient absentes, l'utilisation de vecteurs de mouvement erronés augmentant les pertes lorsque l'on comprime fortement le flux d'image.

D'autres problèmes peuvent survenir lorsque l'on réutilise des données d'aide prévues pour certaines conditions de codage dans un contexte complètement différent. Le codage MPEG offre une plage d'utilisation qui varie de quelques centaines de Kb/s à 50 Mb/s. Pour que le recodage puisse tirer bénéfice des données au maximum, il convient que l'écart entre le débit de recodage et le débit du codage initial ne soit pas trop important. L'utilisation de certains paramètres de codage correspondant à un haut débit, par exemple 20 Mb/s, rendent impossible un codage à faible débit, par exemple 2 Mb/s.

Le but de l'invention est d'apporter une solution pour réutiliser les données d'aide de manière sélective. A cet effet, l'invention va rajouter, dans le flux codé, au moins une signature de codage relative au codage initial. La signature de codage est incluse dans le flux codé afin de pouvoir garder une trace d'informations liées au premier codage qui ne sont pas explicitement contenu dans le flux codé représentatif des images.

L'invention a pour objet un procédé de codage d'un flux d'images vidéo en vue d'un recodage ultérieur selon l'objet de la revendication 1.

La signature de codage est représentative des contraintes de codage. Par contraintes de codage, il faut comprendre les paramètres utilisés pour spécifier les limites extrêmes de codage.

L'invention a également pour objet un procédé de décodage d'un flux d'images vidéo codé incluant une signature de codage en vue d'un recodage ultérieur selon l'objet de la revendication 3.

Afin de corriger les problèmes liés à des modifications du flux après décodage, l'invention va rajouter de l'information relative à l'intégrité de l'image. On réalise une signature de décodage représentative de l'image décodée ou d'une zone de l'image décodée. La signature de décodage est ensuite placée dans le signal décodé avec les paramètres de décodage. Ainsi, pour chaque image ou zone d'image, le codeur est capable de déterminer quelles informations restent valides en fonction de la signature de décodage de l'image. L'introduction d'une signature de décodage représentative d'une zone d'image au sein des données d'aide permet d'identifier si la zone est intègre et donc si les données d'aide sont valides ou non.

Selon un mode de réalisation particulier, la signature de décodage est un mot de n bits correspondant une réduction modulaire de la somme de tous les bits des niveaux de luminance et de chrominance de la zone d'image. Ce type de signature est bien connu dans le domaine des transmissions pour avoir une signature représentative de l'intégrité d'un paquet de données transmises et est plus connu sous le nom de CRC (de l'anglais Cyclic Redundancy Check).

Préférentiellement, l'image est divisée en une pluralité de zones d'image de sorte que chaque point de l'image appartient à au moins une zone, chaque zone ayant une signature de décodage qui lui est associée. La division de l'image en plusieurs zones permet d'avoir plus de précision quant à la modification de l'image réalisée.

L'invention concerne également un procédé de traitement d'un flux d'images vidéo obtenu par le procédé de l'invention, dans lequel le flux d'images est légèrement modifié. Après traitement, on effectue un nouveau calcul de signature de décodage pour remplacer les signatures de décodage associées à chaque zone d'image. La réalisation d'un nouveau calcul de signature de décodage permet de rendre transparent un dispositif de traitement. Il convient de rendre transparent uniquement des dispositifs modifiant très peu l'image. Selon un mode particulier de réalisation, le traitement rendu transparent est une séquence qui comporte un enregistrement du flux d'images sur support magnétique suivi d'une lecture dudit flux à partir dudit support magnétique.

L'invention se rapporte également à un procédé de recodage d'un flux d'images vidéo selon l'objet de la revendication 9 aussi bien que selon l'objet de la revendication 10.

L'invention a aussi pour objet un dispositif adapté pour coder un flux d'images vidéo en vue d'un recodage ultérieur selon l'objet de la revendication 11.

L'invention sera mieux comprise, et d'autres particularités et avantages apparaîtront à la lecture de la description qui va suivre, la description faisant référence aux dessins annexés parmi lesquels :
la figure 1 représente une chaîne de transmission selon l'état de la technique,
la figure 2 représente une chaîne de transmission selon l'invention,
les figures 3 à 5 représentent des éléments constitutifs de la chaîne de transmission de la figure 2,
les figures 6 à 8 représentent des exemples de chaîne de transmission selon un autre aspect de l'invention,
la figure 9 représente un exemple de répartition de l'image en zone d'image,
la figure 10 représente un exemple de circuit générateur de signature de décodage selon l'invention,
la figure 11 représente un exemple de circuit de vérification de signature de décodage selon l'invention, et
la figure 12 représente le format de transmission d'une image non comprimée.

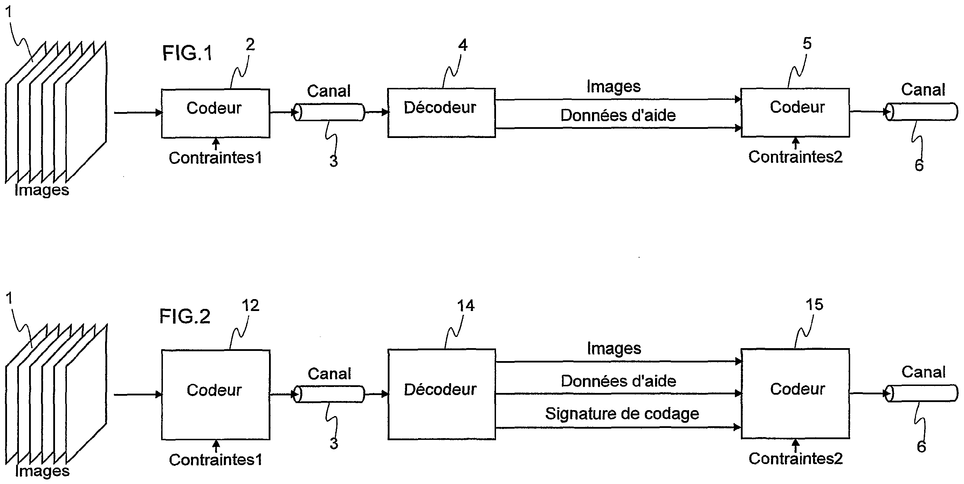

La figure 1 représente une chaîne de transmission d'images selon l'état de la technique. Une séquence d'images 1 est numérisée puis envoyée à un premier codeur 2, par exemple un codeur de type MPEG, pour y être comprimée. Les données représentatives de la séquence d'images 1 sont ensuite transmises via un premier canal de transmission 3. Un décodeur 4 reçoit les données provenant du canal de transmission 3 pour les décoder.

Le décodeur 4 est, par exemple, un décodeur de type MPEG qui fournit d'une part un signal d'image et d'autre part des données d'aide. Dans un but explicatif, le signal d'image et les données d'aide suivent des chemins séparés mais peuvent utiliser le même support physique de transmission. Classiquement, le chemin utilisé par les images est une liaison série haut débit où les images sont cadencées à une vitesse autorisant la visualisation directe, lorsque le traitement se fait en numérique.

Un deuxième codeur 5 reçoit le signal d'image et les données d'aide pour effectuer un nouveau codage afin d'envoyer la séquence d'image sur un deuxième canal de transmission 6. Comme le sait l'homme du métier les données d'aide servent à réutiliser les paramètres de codage utilisé par le premier codeur 2 dans le deuxième codeur 5. Les premier et deuxième codeurs 2 et 5 sont soumis respectivement à des premières contraintes Contraintes1 et à des deuxièmes contraintes Contraintes2 qui spécifient les conditions de codage (débit, type de débit, limitation de structure de GOP, etc...) de chaque codeur. Comme expliqué précédemment, il peut y avoir des incompatibilités entre les premières contraintes Contraintes1 et les deuxièmes contraintes Contraintes2.

La figure 2 représente une chaîne de transmission modifiée selon l'invention. Les premier et deuxième codeurs 2 et 5 sont remplacés par des troisième et quatrième codeurs 12 et 15. Le décodeur 4 est remplacé par un décodeur 14. Une signature de codage représentative des premières contraintes Contraintes1 est envoyée à travers le canal 3 par le troisième codeur 12. Le décodeur 14 identifie la signature de codage et la transmet au quatrième codeur 15 pour que celui-ci puisse en tenir compte lors du recodage. Le signal d'image, les données d'aide et la signature de codage suivent trois chemins séparés mais peuvent, bien évidemment, utiliser le même support physique de transmission.

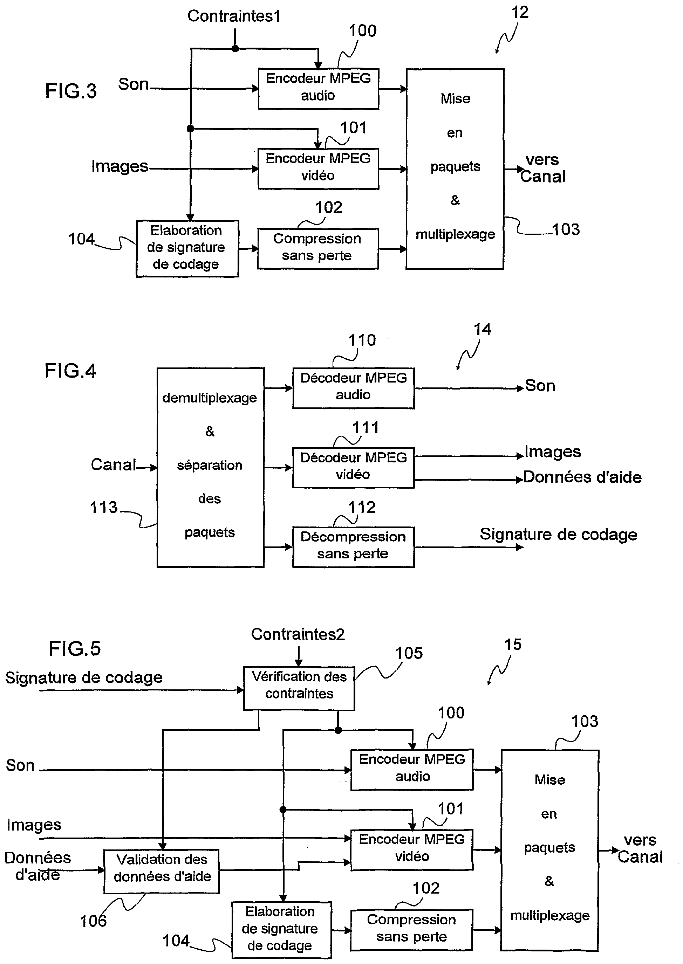

La figure 3 représente la constitution du troisième codeur 12. Le troisième codeur 12 est, par exemple, un codeur de type MPEG qui comporte au moins un circuit encodeur audio 100, au moins un circuit encodeur vidéo 101, au moins un circuit de compression sans perte 102, et au moins un circuit de mise en paquet et de multiplexage 103, lesdits circuits 100 à 103 étant constitués et agencés selon des techniques connus de la norme MPEG. Sur cette figure, on a dissocié le signal de son du signal d'image car la norme MPEG prévoit de les coder séparément, cependant, pour les figures sur lesquelles le signal son n'apparaît pas, celui-ci est considéré comme inclus dans le signal d'image.

Comme connu de l'état de la technique, le codage MPEG définit une technique de codage autorisant de nombreuses possibilités de mise en oeuvre. Les premières contraintes Contraintes1 définissent dans quelle limite le codage doit s'effectuer et sont fournies à cet effet aux circuits encodeur 100 et 101. Les premières contraintes comportent un ou plusieurs des paramètres suivant :
- nature du débit du flux codé, c'est à dire s'il s'agit d'un débit fixe ou variable, ce paramètre dépend des conditions d'utilisation du canal 3,
- valeur du flux nominal ou maximal, c'est à dire le débit demandé au codeur, ce paramètre dépend de la bande passante du canal 3,
- type de structure de groupe d'image, s'il s'agit d'une structure fixe ou variable,
- nombre nominal (pour une structure de GOP fixe) ou maximal (pour une structure de GOP variable) d'images dans un groupe d'image,
- nombre nominal ou maximal d'images prédites dans un groupe d'image,
- nombre maximal d'images successives prédites de manière bidirectionnelle dans un groupe d'image, ce paramètre dépend des capacités du codeur 12,
- nombre maximal de bits par groupe d'images,
- conformité à un format particulier, le format particulier pouvant être défini par exemple dans une norme afin de définir un ou plusieurs des paramètres précédents, et éventuellement d'autres paramètres, à l'aide d'un unique mot.

Les paramètres de contraintes sont fixés par un opérateur en fonction de l'environnement matériel dont il a connaissance et de l'utilisation qui va être normalement faite du flux codé. Le problème de ces paramètres est qu'ils sont fixés à un instant donné dans un contexte donné et que les paramètres en question ne correspondent pas nécessairement à l'usage qui va être réellement fait du flux codé.

Selon l'invention un circuit d'élaboration de signature 104 reçoit les différentes contraintes de codage Contraintes1 correspondant à un signal d'image afin de réaliser une mise en forme selon un format prédéfini, les paramètres de contrainte mis en forme correspondant à la signature de codage. Afin de pouvoir utiliser au mieux la signature de codage, il convient que la mise en forme soit réalisée selon une norme reconnue par tous les fabricants de codeur. Le circuit d'élaboration de signature de codage va fournir régulièrement la signature à un circuit de compression sans perte 102, afin que la signature de codage soit traitée comme des données d'utilisateur. Par régulièrement, il faut comprendre au moins une fois par GOP.

La figure 4 représente schématiquement la constitution du décodeur 14. Le décodeur 14 est, par exemple, un décodeur de type MPEG qui comporte au moins un circuit décodeur audio 110, au moins un circuit décodeur vidéo 111, au moins un circuit de décompression sans perte 112, et au moins un circuit de démultiplexage et séparation des paquets 113, lesdits circuits 110 à 113 étant constitués et agencés selon des techniques connus de la norme MPEG. L'homme du métier peut remarquer que le décodeur 113 correspond à un décodeur classique sur lequel on récupère des données numériques qui correspondent à la signature de codage. Dans un but de clarté, la signature de codage est représentée sur un support indépendant des autres signaux. Comme le sait l'homme du métier, ces données numériques de signature de codage peuvent être multiplexées avec d'autres données numériques par exemple les données d'aide.

La figure 5 représente la constitution du quatrième codeur 15. Le quatrième codeur 15 comporte des circuits identiques au troisième codeur 12 : au moins un circuit encodeur audio 100, au moins un circuit encodeur vidéo 101, au moins un circuit de compression sans perte 102, au moins un circuit de mise en paquet et de multiplexage 103, et un circuit d'élaboration de signature 104. Le codeur 15 comporte en outre un circuit de vérification des contraintes 105 et un circuit de validation des données d'aide 106.

Le circuit de validation des contraintes 105 reçoit d'une part les deuxièmes contraintes Contraintes2 et d'autre part la signature de codage représentative des premières contraintes Contraintes1. Le circuit 105 effectue une comparaison des premières et deuxièmes contraintes de codage afin de déterminer si les données d'aide sont utilisables ou non. La comparaison ne se fait pas à l'identique. A titre d'exemple, si on effectue une réduction de flux avec un facteur 3 ou supérieur, les données d'aides ne sont généralement plus adaptées à la contrainte de recodage et leur utilisation rend le recodage peu performant voire impossible. D'autres paramètres peuvent également indiquer une incompatibilité de codage, si le nombre maximal d'images B successives des premières contraintes est supérieur au nombre maximal d'images B successives que peut gérer le codeur 15, les données d'aide ne peuvent pas être réutilisées. En ce qui concerne la nature du flux, les données d'aides peuvent être réutilisées si le changement de débit le permet. Le type de structure ainsi que le nombre d'image par GOP peuvent différer dans certaines limites si le rapport de débit le permet.

En fonction de la comparaison des contraintes, le circuit de vérification des contraintes 105 va fournir une information de validation des données d'aide. A titre d'exemple, l'information de validation peut être de type binaire pour valider ou annuler la totalité des données d'aide. Selon un autre exemple, l'annulation des données d'aides peut être plus sélective, en donnant la possibilité de conserver le type I, P ou B de chaque image.

Le circuit de vérification des contraintes fournit des informations de contraintes de codage qui correspondent soit aux deuxièmes contraintes, soit aux premières contraintes, ou soit à un mélange des premières et deuxièmes contraintes. Les informations de contraintes de codage seront utilisées pour le codage et envoyées au circuit d'élaboration de signature 104 qui va élaborer une signature de codage représentative des contraintes du codage réalisé.

Il va à présent être décrit un deuxième aspect de l'invention relatif à une signature de décodage. Le principe de la signature de décodage est de vérifier l'intégrité de l'image avant de réutiliser les données d'aide qui s'y reportent.

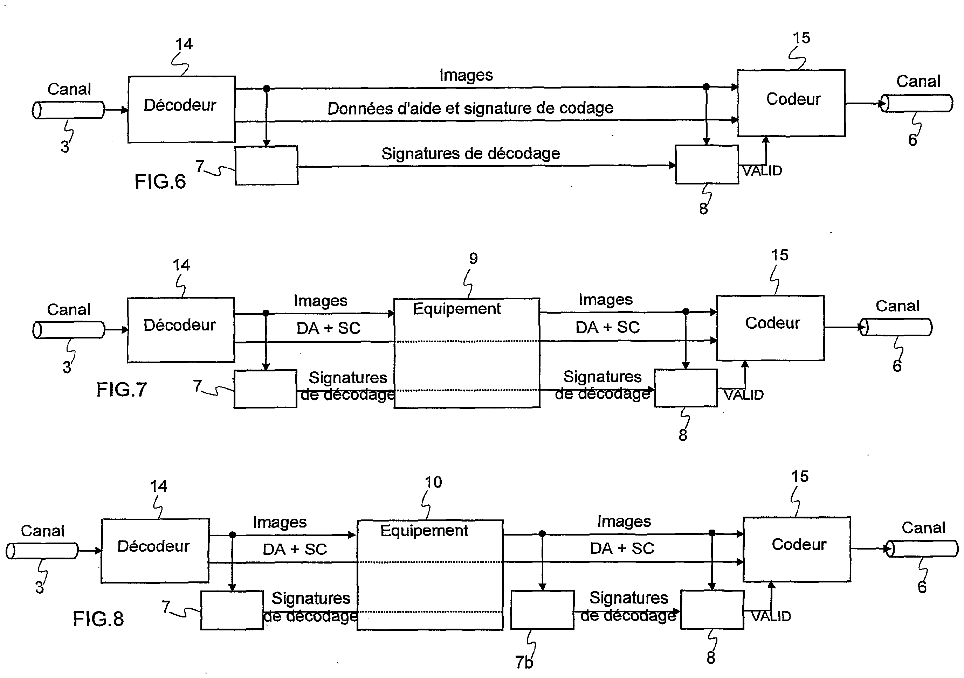

La figure 6 représente une partie de chaîne de transmission d'images. Le décodeur 14 reçoit les données provenant du canal de transmission 3 pour les décoder. De préférence, le décodeur 14 est un décodeur de type MPEG tel que décrit sur la figure 4. Pour simplifier le dessin, les données d'aide et la signature de codage (notées également DA + SC) sont représentées sur un même chemin. Classiquement, les images et les données d'aide sont synchronisées. Un quatrième codeur 15 reçoit le signal d'image et les données d'aide pour effectuer un nouveau codage afin d'envoyer la séquence d'image sur un deuxième canal de transmission 6, tel qu'expliqué précédemment.

Afin de pouvoir vérifier l'intégrité de l'image, un circuit générateur 7 de signature de décodage a été ajouté en sortie du décodeur 14. Le circuit générateur fournit une signature de décodage représentative de l'information contenue dans l'image. Un circuit de vérification 8 de signature de décodage reçoit le signal d'image et le signal de signature et fournit une information de validité VALID de signature au quatrième codeur 15 afin que celui-ci puisse prendre en compte ou non les données d'aide.

L'homme du métier comprendra que l'intérêt d'une telle invention survient lorsqu'un équipement 9 ou 10 est inséré entre le décodeur 14 et le quatrième codeur 15, comme montré sur les figures 7 et 8. A titre d'exemple, l'équipement 9 de la figure 7 peut être une table de mixage vidéo. Suivant l'opération réalisée, le signal d'image de sortie peut être ou ne pas être identique au signal d'image d'entrée. Le circuit de vérification 8 va permettre au quatrième codeur 15 d'identifier les images ou zones d'images modifiées. En fonction des modifications réalisées, le codeur pourra donc réutiliser tout ou partie des données d'aide.

Le cas d'une table de mixage correspond à un cas concret où un reportage est monté en studio et pour lequel une grande partie des séquences d'images reste inchangée. Par contre lorsque l'on fait des retouches sur l'image, le circuit de vérification indique qu'une zone de l'image a changé et seule une partie des données d'aide est réutilisable.

La figure 8 correspond à l'utilisation d'un équipement 10 que l'on considère transparent au niveau du codage. Comme équipement transparent, il convient d'admettre les dispositifs qui agissent sur l'image de manière très faible et qui n'ont pas pour but de modifier l'image. A titre d'exemple, l'équipement 10 est un dispositif de stockage de studio, par exemple un enregistreur au format DVCPRO. Les dispositifs de stockage de studio utilisant des bandes réalisent généralement une compression du signal numérique avec une très légère perte que l'on peut négliger par rapport aux pertes entraînées par les codages de transmission tel MPEG.

Afin de rendre complètement transparent l'équipement 10, il convient d'ajouter un circuit générateur supplémentaire 7b qui recalcule les signatures de décodage à partir du signal d'image sortant de l'équipement 10. Ainsi, les quelques pixels légèrement modifiés sur une image n'invalident pas les signatures de décodage.

Selon une variante préférée, l'équipement 10 utilise une compression d'images vidéo également selon la norme MPEG2. L'équipement 10 peut alors vérifier la signature de codage SC issue du précédent codage et vérifie que les pertes qu'il introduit sont effectivement négligeables par rapport à la qualité de l'image résultant du codage précédent.

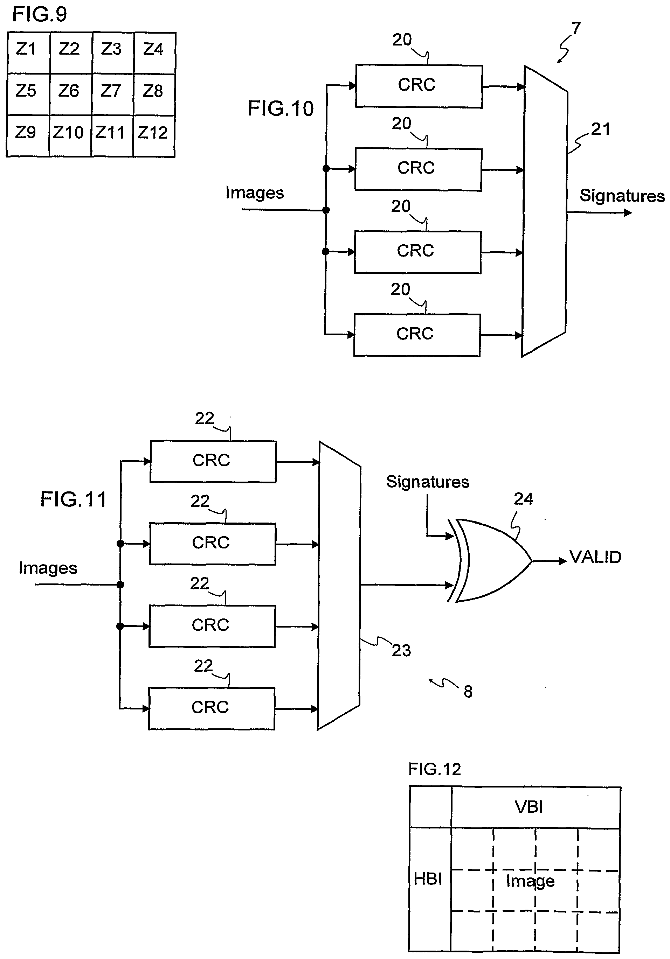

Dans l'exemple préféré, le circuit générateur 7 réalise une découpe de l'image en douze zones d'images Z1 à Z12, comme représenté sur la figure 9. Si une signature de décodage relative à l'une des zones est invalidée, alors le codeur désactive les données d'aides relatives à ladite zone. A titre d'exemple pour le codage MPEG, le codeur ne prendra pas en compte tous les vecteurs de mouvement correspondant aux macroblocs de ladite zone ainsi que tous les vecteurs de mouvement des images passées ou futures qui font référence à ladite zone.

Si plus de la moitié des signatures de décodage d'une image est invalidée, alors le codeur désactive également les paramètres propres à l'image. Dans le codage MPEG, les pas de quantification et les matrices de pondération de DCT peuvent être des paramètres propres à chaque image et donc être invalidée si le nombre de zones modifiées est important.

Pour ce qui est des paramètres propres à la séquence d'images ou au groupe d'images, il convient de conserver ces paramètres même si les images changent. En effet, les informations de type d'image (I, P et B) peuvent être conservées malgré les modifications car l'utilisation d'une image B comme image I est une source potentielle de perte d'information d'image.

La figure 10 représente un mode de réalisation préféré du circuit générateur 7. Le circuit générateur 7 comprend quatre circuits de calcul 20 ayant chacun une entrée et une sortie, les entrées étant reliées ensemble et recevant le signal d'images. Chacun des circuits de calcul 20 est un circuit de calcul de clef de contrôle d'un type connu qui effectue une réduction modulaire des données entrant dans lesdits circuits. Les circuits de calcul 20 sont activés uniquement lorsque les données d'image présentes sur le signal d'image correspondent à la zone dont ils effectuent la signature de décodage. Lorsque toutes les données d'image présentes sur les différentes lignes d'une zone ont été entrées dans un circuit de calcul 20, ledit circuit 20 sort en série la signature de décodage correspondante. Un multiplexeur 21 sélectionne l'un des circuits de calcul afin de multiplexer les signatures de décodage sur le signal de signature.

La figure 11 représente un mode de réalisation préféré du circuit de vérification de signature 8. Le circuit de vérification 8 comporte une structure de calcul comprenant quatre circuits de calcul 22 et un multiplexeur 23 qui assure une fonction identique à la fonction du circuit générateur 7. Une porte 24 de type OU-Exclusif à deux entrées reçoit d'une part le signal sortant du multiplexeur 223 et, d'autre part, le signal de signatures provenant d'un circuit générateur 7 afin de réaliser une comparaison entre les signaux et de fournir un signal VALID représentatif de l'intégrité des zones d'image, le signal VALID étant actif lorsqu'une différence apparaît entre la signature de décodage transmise et la signature de décodage recalculée.

De très nombreuses variantes de l'invention sont possibles. Selon une variante, les signatures de codage et de décodage sont incluses dans le signal d'image. La figure 12 représente une image transmise selon un format autorisant la visualisation directe. Comme le sait l'homme du métier, l'image transmise comporte une partie d'image réelle et une ou plusieurs parties d'image VBI et HBI rajoutées pour la synchronisation. Les parties d'image rajoutées VBI et HBI servent à laisser le temps à un spot de tube cathodique de revenir à l'origine d'une ligne (intervalle horizontal ou HBI) ou à l'origine de l'écran (intervalle vertical ou VBI). Les signatures de codage et de décodage sont incluses dans les intervalles rajoutés de l'image de sorte que les signatures de décodage restent synchrones avec l'image.

Une autre variante consiste à inclure dans les circuits de décodage et de codage respectivement les circuits de génération et de vérification de signature de codage et de décodage. Au niveau de la structure, l'architecture des circuits de codage et de décodage comportant une pluralité de microprocesseurs couplés avec des mémoires, il suffit de modifier le programme implanté dans les circuits pour inclure la fonction de circuit générateur de signatures de codage et de décodage ou de circuit de vérification de signature. De plus, l'intervalle horizontal et l'intervalle vertical de l'image sont déjà utilisés pour les données d'aide et permettent d'inclure le signal de signatures dans lesdits intervalles.

## Revendications

1. Procédé de codage d'un flux d'images vidéo en vue d'un recodage ultérieur utilisant un même algorithme de compression d'image avec perte d'information qui utilise des paramètres de codage, ledit procédé comprenant les étapes suivantes :
- coder ledit flux d'images vidéo en un flux codé en respectant des premières contraintes de codage ;
- insérer dans ledit flux codé des paramètres de codage permettant la reconstruction du flux d'images vidéo,
ledit procédé étant **caractérisé en ce qu'**il comprend en outre les étapes suivantes :
- calculer une signature de codage à partir desdites premières contraintes de codage, ladite signature représentant lesdites premières contraintes de codage et permettant de garder des informations liées au premier codage;
- insérer dans le flux codé ladite signature de codage en l'identifiant comme donnée à conserver en vue d'un recodage ultérieur.

2. Procédé selon la revendication 1, **caractérisé en ce que** les contraintes de codage comportent un ou plusieurs des paramètres suivants :
- nature fixe ou variable du débit du flux codé,
- valeur de débit du flux nominal ou maximal,
- type fixe ou variable de structure de groupe d'image,
- nombre nominal ou maximal d'images dans un groupe d'image,
- nombre nominal ou maximal d'images prédites dans un groupe d'image,
- nombre maximal d'images successives prédites de manière bidirectionnelle dans un groupe d'image,
- nombre maximum de bits par groupe d'image,
- conformité à un format particulier.

3. Procédé de décodage d'un flux d'images vidéo codé selon le procédé de l'une des revendications 1 à 2 en vue d'un recodage ultérieur utilisant un même algorithme de compression d'image, avec perte d'information qui utilise des paramètres de codage, ledit procédé comprenant les étapes suivantes :
- décoder ledit flux codé en un signal décodé ;
- inclure dans le signal décodé une partie des paramètres de codage utilisés lors du précédent codage en vue d'une réutilisation ultérieure desdits paramètres,
ledit procédé étant **caractérisé en ce que**, lors du décodage, la signature de codage est incorporée dans le signal décodé parmi la partie des paramètres de codage.

4. Procédé selon la revendication 3, **caractérisé en ce que**, lors du décodage, on réalise au moins une signature de décodage représentative de l'intégrité de l'information contenue dans au moins une zone de chaque image décodée du flux et on place cette signature dans le signal décodé avec les paramètres de codage.

5. Procédé selon la revendication 4, **caractérisé en ce que** la signature de décodage est un mot de n bits calculée par réduction modulaire de la somme de tous les bits des niveaux de luminance et de chrominance de la zone d'image.

6. Procédé selon l'une des revendications 4 ou 5, **caractérisé en ce que** l'image est divisée en une pluralité de zones d'image de sorte que chaque point de l'image appartient à au moins une zone, chaque zone ayant une signature de décodage qui lui est associée.

7. Procédé de traitement d'un flux d'images vidéo obtenu par le procédé de l'une des revendications 4 à 6, **caractérisé en ce que**, après traitement, on effectue un nouveau calcul de signature de décodage pour remplacer les signatures associées à chaque zone d'image.

8. Procédé selon la revendication 7, **caractérisé en ce que** le traitement est une séquence qui comporte un enregistrement du flux d'images sur support magnétique suivi d'une lecture dudit flux à partir dudit support magnétique.

9. Procédé de recodage d'un flux d'images vidéo préalablement décodé selon le procédé de l'une des revendications 3 à 8, dans lequel le recodage se fait à l'aide d'un algorithme de compression d'image du même type que le algorithme de compression d'image avec perte d'information utilisé précédemment, et dans lequel des paramètres du codage précédent sont transmis avec le flux d'images, **caractérisé en ce que**, avant de procéder au recodage du flux d'images vidéo en respectant des secondes contraintes de codage, on compare les signatures de codage associées aux images dudit flux avec lesdites secondes contraintes afin de valider ou d'invalider tout ou partie des paramètres de codage suivant lesdites signatures decodage.

10. Procédé de recodage d'un flux d'images vidéo préalablement décodé selon le procédé de l'une des revendications 4 à 9, dans lequel le recodage se fait à l'aide d'un algorithme de compression d'image du même type que le algorithme de compression d'image avec perte d'information utilisé précédemment , et dans lequel des paramètres du codage précédent sont transmis avec le flux d'images, **caractérisé en ce que**, avant de procéder au recodage du flux d'images vidéo, on vérifie les signatures de décodage associées aux images dudit flux afin de valider ou d'invalider tout ou partie des paramètres de codage suivant lesdites signatures de décodage.

11. Dispositif adapté pour coder un flux d'images vidéo en vue d'un recodage ultérieur utilisant un même algorithme de compression d'image avec perte d'information qui utilise des paramètres de codage, ledit dispositif comprenant des moyens pour:
- coder ledit flux d'images vidéo en un flux codé en respectant des premières contraintes de codage ;
- insérer dans ledit flux codé des paramètres de codage permettant la reconstruction du flux d'images vidéo,
ledit dispositif étant **caractérisé en ce qu'**il comprend en outre des moyens pour
- calculer une signature de codage à partir desdites premières contraintes de codage, ladite signature représentant lesdites premières contraintes de codage et permettant de garder des informations liées au premier codage;
- insérer dans le flux codé ladite signature de codage en l'identifiant comme donnée à conserver en vue d'un recodage ultérieur.

12. Dispositif selon la revendication 11 comprenant en outre des moyens pour :
- décoder ledit flux codé en un signal décodé ;
- inclure dans le signal décodé une partie des paramètres de codage utilisés lors du précédent codage en vue d'une réutilisation ultérieure desdits paramètres,
ledit dispositif étant **caractérisé en ce que**, lors du décodage, la signature de codage est incorporée dans le signal décodé parmi la partie des paramètres de codage.

13. Dispositif selon la revendication 12 **caractérisé en ce que**, lors du décodage, on réalise au moins une signature de décodage représentative de l'intégrité de l'information contenue dans au moins une zone de chaque image décodée du flux et on place cette signature dans le signal décodé avec les paramètres de codage.

14. Dispositif selon la revendication 13 **caractérisé en ce que** la signature de décodage est un mot de n bits calculée par réduction modulaire de la somme de tous les bits des niveaux de luminance et de chrominance de la zone d'image.

## Patentansprüche

1. Verfahren zur Kodierung eines Videobildstroms für eine spätere Neukodierung unter Verwendung eines gleichen Algorithmus zur Bildkomprimierung mit Informationsverlust, das Kodierungsparameter verwendet, wobei dieses Verfahren die folgenden Schritte umfasst:
- Kodierung des besagten Videobildstroms in einen kodierten Strom unter Einhaltung von ersten Kodierungsbeschränkungen;
- Einfügen in den besagten kodierten Strom von Kodierungsparametern, die die Rekonstruktion des Videobildstroms ermöglichen,
wobei das besagte Verfahren **dadurch gekennzeichnet ist, dass** es des Weiteren die folgenden Schritte umfasst:
- Berechnung einer Kodierungssignatur anhand der besagten ersten Kodierungsbeschränkungen, wobei die besagte Signatur die besagten ersten Kodierungsbeschränkungen darstellt und ermöglicht, mit der ersten Kodierung verbundene Informationen zu behalten;
- Einfügen der besagten Kodierungssignatur in den kodierten Strom, indem sie als für eine spätere Neukodierung aufzubewahrende Datenangabe identifiziert wird.

2. Verfahren nach Anspruch 1, **dadurch gekennzeichnet, dass** die Kodierungsbeschränkungen einen oder mehrere der folgenden Parameter beinhalten:
- feste oder variable Art der Bitrate des kodierten Stroms,
- Bitratenwert des nominalen oder maximalen Stroms,
- fester oder variabler Typ einer Bildgruppenstruktur,
- nominale oder maximale Anzahl von Bildern in einer Bildgruppe,
- nominale oder maximale Anzahl von vorhergesagten Bildern in einer Bildgruppe,
- maximale Anzahl von bidirektional vorhergesagten aufeinanderfolgenden Bildern in einer Bildgruppe,
- Höchstzahl von Bits pro Bildgruppe,
- Übereinstimmung mit einem besonderen Format.

3. Verfahren zur Dekodierung eines Videobildstroms, kodiert nach dem Verfahren eines der Ansprüche 1 bis 2 für eine spätere Neukodierung unter Verwendung eines gleichen Algorithmus zur Bildkomprimierung mit Informationsverlust, das Kodierungsparameter verwendet, wobei das besagte Verfahren die folgenden Schritte umfasst:
- Dekodierung des besagten kodierten Stroms in ein dekodiertes Signal;
- Aufnahme in das dekodierte Signal von einem Teil der während der vorherigen Kodierung verwendeten Kodierungsparameter für eine spätere Wiederverwendung der besagten Parameter,
wobei das besagte Verfahren **dadurch gekennzeichnet ist, dass** während der Dekodierung die Kodierungssignatur in das dekodierte Signal unter den Teil der Kodierungsparameter eingegliedert wird.

4. Verfahren nach Anspruch 3, **dadurch gekennzeichnet, dass** während der Dekodierung mindestens eine Dekodierungssignatur ausgeführt wird, die repräsentativ für die Integrität der Information ist, die in mindestens einem Bereich jedes dekodierten Bildes des Stroms enthalten ist, und diese Signatur in das dekodierte Signal mit den Kodierungsparametern platziert wird.

5. Verfahren nach Anspruch 4, **dadurch gekennzeichnet, dass** die Dekodierungssignatur ein Wort aus n Bits ist, die durch modulare Reduktion der Summe aller Bits der Luminanz- und Chrominanzniveaus des Bildbereichs berechnet wird.

6. Verfahren nach einem der Ansprüche 4 oder 5, **dadurch gekennzeichnet, dass** das Bild in eine Vielzahl von Bildbereichen aufgeteilt ist, dergestalt, dass jeder Punkt des Bildes zu mindestens einem Bereich gehört, wobei jeder Bereich eine Dekodierungssignatur hat, die mit ihm verbunden ist.

7. Verfahren zur Verarbeitung eines Videobildstroms, erhalten durch das Verfahren eines der Ansprüche 4 bis 6, **dadurch gekennzeichnet, dass** nach der Verarbeitung eine neue Berechnung der Dekodierungssignatur erfolgt, um die mit jedem Bildbereich verbundenen Signaturen auszutauschen.

8. Verfahren nach Anspruch 7, **dadurch gekennzeichnet, dass** die Verarbeitung eine Sequenz ist, die eine Speicherung des Bildstroms auf Magnetdatenträger gefolgt von einem Auslesen des besagten Stroms von dem besagten Magnetdatenträger beinhaltet.

9. Verfahren zur Neukodierung eines Videobildstroms, der vorher nach dem Verfahren eines der Ansprüche 3 bis 8 dekodiert wurde, wobei die Neukodierung mit Hilfe eines Algorithmus zur Bildkomprimierung erfolgt, der vom gleichen Typ wie der zuvor verwendete Algorithmus zur Bildkomprimierung mit Informationsverlust ist, und wobei Parameter der vorherigen Kodierung mit dem Bildstrom übertragen werden, **dadurch gekennzeichnet, dass** vor der Vornahme der Neukodierung des Videobildstroms unter Einhaltung zweiter Kodierungsbeschränkungen die mit den Bildern des besagten Stroms verbundenen Kodierungssignaturen mit den besagten zweiten Beschränkungen verglichen werden, um alle oder einen Teil der Kodierungsparameter entsprechend den besagten Kodierungssignaturen zu bestätigen oder für ungültig zu erklären.

10. Verfahren zur Neukodierung eines Videobildstroms, der vorher nach dem Verfahren eines der Ansprüche 4 bis 9 dekodiert wurde, wobei die Neukodierung mit Hilfe eines Algorithmus zur Bildkomprimierung erfolgt, der vom gleichen Typ wie der zuvor verwendete Algorithmus zur Bildkomprimierung mit Informationsverlust ist, und wobei Parameter der vorherigen Kodierung mit dem Bildstrom übertragen werden, **dadurch gekennzeichnet, dass** vor der Vornahme der Neukodierung des Videobildstroms die mit den Bildern des besagten Stroms verbundenen Dekodierungssignaturen überprüft werden, um alle oder einen Teil der Kodierungsparameter entsprechend den besagten Dekodierungssignaturen zu bestätigen oder für ungültig zu erklären.

11. Vorrichtung, geeignet zur Kodierung eines Videobildstroms für eine spätere Neukodierung unter Verwendung eines gleichen Algorithmus zur Bildkomprimierung mit Informationsverlust, die Kodierungsparameter verwendet, wobei die besagte Vorrichtung Mittel umfasst für:
- die Kodierung des besagten Videobildstroms in einen kodierten Strom, unter Einhaltung erster Kodierungsbeschränkungen;
- das Einfügen in den besagten kodierten Strom von Kodierungsparametern, die die Rekonstruktion des Videobildstroms ermöglichen,
wobei die besagte Vorrichtung **dadurch gekennzeichnet ist, dass** sie des Weiteren Mittel umfasst für:
- die Berechnung einer Kodierungssignatur anhand der besagten ersten Kodierungsbeschränkungen, wobei die besagte Signatur die besagten ersten Kodierungsbeschränkungen darstellt und ermöglicht, mit der ersten Kodierung verbundene Informationen zu behalten;
- das Einfügen der besagten Kodierungssignatur in den kodierten Strom, indem sie als für eine spätere Neukodierung aufzubewahrende Datenangabe identifiziert wird.

12. Vorrichtung nach Anspruch 11, die des Weiteren Mittel umfasst für:
- die Dekodierung des besagten kodierten Stroms in ein dekodiertes Signal;
- die Aufnahme in das dekodierte Signal von einem Teil der während der vorherigen Kodierung verwendeten Kodierungsparameter für eine spätere Wiederverwendung der besagten Parameter,
wobei die besagte Vorrichtung **dadurch gekennzeichnet ist, dass** während der Dekodierung die Kodierungssignatur in das dekodierte Signal unter den Teil der Kodierungsparameter eingegliedert wird.

13. Vorrichtung nach Anspruch 12, **dadurch gekennzeichnet, dass** während der Dekodierung mindestens eine Dekodierungssignatur ausgeführt wird, die repräsentativ für die Integrität der Information ist, die in mindestens einem Bereich jedes dekodierten Bildes des Stroms enthalten ist, und diese Signatur in das dekodierte Signal mit den Kodierungsparametern platziert wird.

14. Vorrichtung nach Anspruch 13, **dadurch gekennzeichnet, dass** die Dekodierungssignatur ein Wort aus n Bits ist, die durch modulare Reduktion der Summe aller Bits der Luminanz- und Chrominanzniveaus des Bildbereichs berechnet wird.

## Claims

1. Method for coding a video frame stream for subsequent re-coding, using the same frame compression algorithm with information loss that uses coding parameters, said method comprising the following steps:
- coding said video frame stream in a coded stream, in compliance with the first coding constraints;
- inserting coding parameters in said coded stream to remaster the video frame stream,
said method being **characterised in that** it also comprises the following steps:
- computing a coding signature from said first coding constraints, said signature representing said first coding constraints and enabling the first coding information to be retained;
- inserting said coding signature into the coded stream by identifying it as data to be stored for subsequent re-coding.

2. Method according to claim 1, **characterised in that** the coding constraints comprise one or more of the following parameters:
- fixed or variable nature of the coded stream output,
- nominal or maximum stream output value,
- fixed or variable type of frame group structure,
- nominal or maximum number of frames in a frame group,
- nominal or maximum number of predicted frames in a frame group,
- maximum number of sequential predicted frames in a bidirectional manner in a frame group,
- maximum number of bits in a frame group,
- conformity with a specific format.

3. Method for decoding a video frame stream coded according to the method of one of claims 1 to 2, for subsequent re-coding, using the same frame compression algorithm with information loss that uses coding parameters, said method comprising the following steps:
- decoding said coded stream in a decoded signal;
- adding to the decoded signal part of the coding parameters used for the previous coding for subsequent reuse of said parameters.
said method being **characterised in that**, during decoding, the coding signature is incorporated into the decoded signal among the part of the coding parameters.

4. Method according to claim 3, **characterised in that**, during decoding, at least one decoding signature is generated, representative of the integrity of the information contained in at least one zone of each decoded stream frame and this signature is placed in the decoded signal with the coding parameters.

5. Method according to claim 4, **characterised in that** the decoding signature is a word of n bits, computed by modular reduction of the sum of all luminance and chrominance level bits of the frame zone.

6. Method according to any of claims 4 or 5, **characterised in that** the frame is split into several frame zones, so that each frame point belongs to at least one zone, each zone having an associated decoding signature.

7. Method for processing a video frame stream derived from the method of one of claims 4 to 6, **characterised in that**, after processing, the decoding signature is computed again to replace the signatures associated with each frame zone.

8. Method according to claim 7, **characterised in that** the processing is a sequence that comprises the backup of the frame stream onto a magnetic medium followed by reading of said stream from said magnetic medium.

9. Method for re-coding a video frame stream previously decoded according to the method of one of claims 3 to 8, wherein re-coding is done using a frame compression algorithm similar to the frame compression algorithm with information loss used previously, and wherein parameters of the previous coding are sent with the frame stream, **characterised in that**, prior to re-coding the video frame stream in keeping with second coding constraints, the coding signatures associated with the frames of said stream are compared with said second constraints to confirm or reject all or part of the coding parameters according to said coding signatures.

10. Method for re-coding a video frame stream previously decoded according to the method of one of claims 4 to 9, wherein re-coding is done using a frame compression algorithm similar to the frame compression algorithm with information loss used previously, and wherein parameters of the previous coding are sent with the frame stream, **characterised in that**, prior to re-coding the video frame stream, the decoding signatures associated with the frames of said stream are verified to confirm or reject all or part of the coding parameters according to said decoding signatures.

11. Device suited to the coding of a video frame stream for subsequent re-coding, using the same frame compression algorithm with information loss that uses coding parameters, said device comprising means for:
- coding said video frame stream in a coded stream, in compliance with the first coding constraints;
- inserting coding parameters in said coded stream to remaster the video frame stream.
said device being **characterised in that** it also comprises means for:
- computing a coding signature from said first coding constraints, said signature representing said first coding constraints and enabling the first coding information to be retained;
- inserting said coding signature into the coded stream by identifying it as data to be stored for subsequent re-coding.

12. Device according to claim 11, also comprising means for:
- decrypting said coded stream in a decoded signal;
- adding to the decoded signal part of the coding parameters used for the previous coding for subsequent reuse of said parameters,
said device being **characterised in that**, during decoding, the coding signature is incorporated into the decoded signal among the part of the coding parameters.

13. Device according to claim 12, **characterised in that**, during decoding, at least one decoding signature is generated, representative of the integrity of the information contained in at least one zone of each decoded stream frame and this signature is placed in the decoded signal with the coding parameters.

14. Device according to claim 13, **characterised in that** the decoding signature is a word of n bits, computed by modular reduction of the sum of all luminance and chrominance level bits of the image zone.
